(19)

Europäisches
Patentamt
European
Patent Office
Office européen
des brevets

(11) **EP 3 363 850 A1**

(12) **EUROPEAN PATENT APPLICATION**
published in accordance with Art. 153(4) EPC

(43) Date of publication:
**22.08.2018 Bulletin 2018/34**

(21) Application number: **16855471.5**

(22) Date of filing: **13.10.2016**

(51) Int Cl.:
*C08J 3/22* (2006.01)          *C08J 3/24* (2006.01)
*C08K 3/36* (2006.01)          *C08K 5/18* (2006.01)
*C08L 15/00* (2006.01)          *C08L 33/08* (2006.01)

(86) International application number:
**PCT/JP2016/080384**

(87) International publication number:
**WO 2017/065218 (20.04.2017 Gazette 2017/16)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **15.10.2015 JP 2015203945**

(71) Applicant: **Zeon Corporation
Tokyo 100-8246 (JP)**

(72) Inventor: **FUKUMINE, Yoshio
Tokyo 100-8246 (JP)**

(74) Representative: **Maiwald Patent- und
Rechtsanwaltsgesellschaft mbH
Elisenhof
Elisenstraße 3
80335 München (DE)**

(54) **CROSSLINKABLE RUBBER COMPOSITION MANUFACTURING METHOD**

(57)     Provided is a method for producing a cross-linkable rubber composition, comprising: a first step of providing a carboxyl group-containing nitrile copolymer rubber (A) having an iodine value of 120 or less; a second step of mixing an acrylic rubber (b1) with an aromatic polyamine cross-linking agent (b2) to obtain a masterbatch (B); and a third step of mixing the carboxyl group-containing nitrile copolymer rubber (A) with the masterbatch (B).

EP 3 363 850 A1

**Description**

TECHNICAL FIELD

The present invention is directed to a method for producing a cross-linkable rubber composition and relates to a method for producing a cross-linkable rubber composition which can provide a cross-linked rubber having excellent mechanical strength and heat aging resistance.

BACKGROUND ART

Nitrile rubbers have hitherto been used, by taking advantage of the oil resistance, mechanical properties, chemical resistance and the like thereof, as the materials for vehicle rubber components such as hoses and tubes; and hydrogenated nitrile rubbers obtained by hydrogenating the carbon-carbon double bonds in the polymer main chains of nitrile rubbers are excellent in heat resistance, and accordingly used as rubber components such as hoses and seals.

As for such a nitrile rubber, for example, Patent Document 1 discloses a method for producing a cross-linkable nitrile rubber composition comprising: a step of providing a carboxyl group-containing nitrile copolymer rubber (A) having an iodine value of 120 or less; a step of mixing a nitrile copolymer rubber (b1) having an iodine value of 120 or less with an aromatic polyamine cross-linking agent (b2) at a temperature equal to or higher than the melting point of the aromatic polyamine cross-linking agent (b2) to obtain a masterbatch (B); and a step of blending the carboxyl group-containing nitrile copolymer rubber (A) having an iodine value of 120 or less with the masterbatch (B).

According to the technique of Patent Document 1, a cross-linked rubber having excellent tensile strength, elongation at break, and hardness can be obtained even by steam cross-linking, but the cross-linked rubber does not have sufficient heat aging resistance. Therefore, it has been desired to improve the heat aging resistance.

RELATED ART DOCUMENTS

PATENT DOCUMENTS

Patent Document 1: JP 5742719B

SUMMARY OF INVENTION

PROBLEM TO BE SOLVED BY INVENTION

The present invention has been made in view of such a circumstance, and an object of the present invention is to provide a method for producing a cross-linkable rubber composition which can provide a cross-linked rubber having excellent mechanical strength and heat aging resistance, and a method for producing a cross-linked rubber using the cross-linkable rubber composition obtained by the above method.

MEANS FOR SOLVING THE PROBLEM

The present inventors have engaged in a diligent study to achieve the above object, and consequently have found that the object can be achieved by adopting a step of mixing a carboxyl group-containing nitrile copolymer rubber having an iodine value of 120 or less with a masterbatch (B) including an acrylic rubber (b1) and an aromatic polyamine cross-linking agent (b2), thus completing the present invention.

Specifically, the present invention provides a method for producing a cross-linkable rubber composition, comprising: a first step of providing a carboxyl group-containing nitrile copolymer rubber (A) having an iodine value of 120 or less; a second step of mixing an acrylic rubber (b1) with an aromatic polyamine cross-linking agent (b2) to obtain a masterbatch (B); and a third step of mixing the carboxyl group-containing nitrile copolymer rubber (A) with the masterbatch (B).

In the second step, the acrylic rubber (b1) is preferably mixed with the aromatic polyamine cross-linking agent (b2) at a temperature higher than a melting point of the aromatic polyamine cross-linking agent (b2) by 10°C or more.

The amount of the masterbatch (B) mixed is preferably 0.1 to 40 parts by weight in relation to 100 parts by weight of the carboxyl group-containing nitrile copolymer rubber (A).

The mixing ratio between the acrylic rubber (b1) and the aromatic polyamine cross-linking agent (b2), the acrylic rubber (b1): the aromatic polyamine cross-linking agent (b2), is preferably 20:80 to 90:10 by weight.

In the third step, the carboxyl group-containing nitrile copolymer rubber (A) is preferably mixed with the masterbatch (B) and silica.

The present invention also provides a method for producing a cross-linked rubber, comprising a step of cross-linking the cross-linkable rubber composition obtained by any one of the aforementioned methods.

EFFECTS OF INVENTION

According to the present invention, there can be provided a cross-linkable rubber composition which can provide a cross-linked rubber having excellent mechanical strength and heat aging resistance, and a cross-linked rubber obtained by cross-linking the cross-linkable rubber composition.

DESCRIPTION OF EMBODIMENTS

<Method for producing cross-linkable rubber composition>

The method for producing a cross-linkable rubber composition of the present invention comprises:

a step of providing a carboxyl group-containing nitrile copolymer rubber (A) having an iodine value of 120 or less;
a step of mixing an acrylic rubber (b1) with an aromatic polyamine cross-linking agent (b2) to obtain a masterbatch (B); and
a step of mixing the carboxyl group-containing nitrile copolymer rubber (A) with the masterbatch (B).

According to the method of the present invention, a cross-linkable rubber composition can be obtained by blending the carboxyl group-containing nitrile copolymer rubber (A) having an iodine value of 120 or less with the masterbatch (B) including the acrylic rubber (b1) and the aromatic polyamine cross-linking agent (b2).

<First step>

The first step of the method of the present invention is a step of providing a carboxyl group-containing nitrile copolymer rubber (A) having an iodine value of 120 or less.
The carboxyl group-containing nitrile copolymer rubber (A) having an iodine value of 120 or less (hereinafter abbreviated to "carboxyl group-containing nitrile copolymer rubber (A)") used in the present invention is a rubber having an iodine value of 120 or less and obtained through a step of copolymerizing an $\alpha,\beta$-ethylenically unsaturated nitrile monomer, a carboxyl group-containing monomer, and a monomer copolymerizable with the above monomers added if needed.
The $\alpha,\beta$-ethylenically unsaturated nitrile monomer is not particularly limited as long as it is an $\alpha,\beta$-ethylenically unsaturated compound having a nitrile group. Examples thereof include acrylonitrile; $\alpha$-halogenoacrylonitrile such as $\alpha$-chloroacrylonitrile and $\alpha$-bromoacrylonitrile; $\alpha$-alkylacrylonitrile such as methacrylonitrile and the like. Among these, acrylonitrile and methacrylonitrile are preferred, and acrylonitrile is particularly preferred. These $\alpha,\beta$-ethylenically unsaturated nitrile monomers may be used singly or in combinations of two or more thereof.
The content of the $\alpha,\beta$-ethylenically unsaturated nitrile monomer unit is preferably 10 to 60 wt%, more preferably 15 to 55 wt%, even more preferably 20 to 50 wt% in relation to the total amount of the monomer units. When the content of the $\alpha,\beta$-ethylenically unsaturated nitrile monomer unit is too small, a cross-linked product to be obtained may have poor oil resistance. On the other hand, when the content is too large, a cross-linked product to be obtained may have poor cold resistance.
The carboxyl group-containing monomer is not particularly limited as long as it is a monomer which is copolymerizable with the $\alpha,\beta$-ethylenically unsaturated nitrile monomer and has one or more unsubstituted (free) carboxyl groups which are not esterified. Examples of such a carboxyl group-containing monomer include an $\alpha,\beta$-ethylenically unsaturated monocarboxylic monomer, an $\alpha,\beta$-ethylenically unsaturated polycarboxylic monomer, an $\alpha,\beta$-ethylenically unsaturated dicarboxylic monoester monomer and the like. Examples of the carboxyl group-containing monomer also include a monomer in which a carboxylic group thereof forms a carboxylic acid salt. An $\alpha,\beta$-ethylenically unsaturated polycarboxylic acid anhydride also can be used as the carboxyl group-containing monomer because its acid anhydride group cleaves to form a carboxyl group after copolymerization.
Examples of the $\alpha,\beta$-ethylenically unsaturated monocarboxylic monomer include acrylic acid, methacrylic acid, ethylacrylic acid, crotonic acid, cinnamic acid and the like.
Examples of the $\alpha,\beta$-ethylenically unsaturated polycarboxylic monomer include a butenedionic acid, such as fumaric acid and maleic acid, itaconic acid, citraconic acid and the like. Examples of the $\alpha,\beta$-ethylenically unsaturated polycarboxylic acid anhydride include maleic acid anhydride and the like.
Examples of the $\alpha,\beta$-ethylenically unsaturated dicarboxylic monoester monomer include monoalkyl maleates such as monomethyl maleate, monoethyl maleate, monopropyl maleate, and mono-n-butyl maleate; monocycloalkyl maleates such as monocyclopentyl maleate, monocyclohexyl maleate, and monocycloheptyl maleate; monoalkylcycloalkyl maleate such as monomethylcyclopentyl maleate and monoethylcyclohexyl maleate; monoalkyl fumarates such as monomethyl fumarate, monoethyl fumarate, monopropyl fumarate, and mono-n-butyl fumarate; monocycloalkyl fumarates such as monocyclopentyl fumarate, monocyclohexyl fumarate, and monocycloheptyl fumarate; monoalkylcycloalkyl fumarates such as monomethylcyclopentyl fumarate and monoethylcyclohexyl fumarate; monoalkyl citraconates such as monomethyl citraconate, monoethyl citraconate, monopropyl citraconate, and mono-n-butyl citraconate; monocycloalkyl citraconates such as monocyclopentyl citraconate, monocyclohexyl citraconate, and monocycloheptyl citraconate; monoalkylcycloalkyl citraconates such as monomethylcyclopentyl citraconate and monoethylcyclohexyl citraconate; monoalkyl itaconate such as monomethyl itaconate, monoethyl itaconate, monopropyl itaconate, and mono-n-butyl itaconate; monocycloalkyl itaconates such as monocylopentyl itaconate, monocyclohexyl itaconate, and monocycloheptyl itaconate; monoalkylcycloalkyl itaconates such as monomethylcyclopentyl itaconate and monoethylcyclohexyl itaconate; and the like.

Among these, in view of highly remarkably exhibiting the effect of the present invention, the $\alpha,\beta$-ethylenically unsaturated dicarboxylic monoester is preferable, and mono-n-butyl fumarate, mono-n-butyl itaconate, and mono-n-butyl maleate are more preferable. Mono-n-butyl maleate is particularly preferable.

The content of the carboxyl group-containing monomer unit is preferably 0.1 to 20 wt%, more preferably 0.2 to 15 wt%, even more preferably 0.5 to 10 wt% in relation to the total amount of the monomer units. When the content of the carboxyl group-containing monomer unit is too small, mechanical strength and compression set resistance of a cross-linked product to be obtained may deteriorate. On the other hand, when the content is too large, the scorch stability of the cross-linkable nitrile rubber composition may deteriorate, and fatigue resistance of a cross-linked product to be obtained may decrease.

The carboxyl group-containing nitrile copolymer rubber (A) used in the present invention is preferably obtained by copolymerizing the $\alpha,\beta$-ethylenically unsaturated nitrile monomer and the carboxyl group-containing monomer together with a conjugated diene monomer so that a cross-linked product to be obtained exhibits rubber elasticity.

As for the proportion of each monomer for copolymerization, the amount of the $\alpha,\beta$-ethylenically unsaturated nitrile monomer is preferably 10 to 60 parts by weight, more preferably 15 to 55 parts by weight, particularly preferably 20 to 50 parts by weight in relation to 100 parts by weight of the total amount of the monomers subjected to copolymerization; the amount of the carboxyl group-containing monomer is preferably 0.1 to 20 parts by weight, more preferably 0.2 to 15 parts by weight, particularly preferably 0.5 to 10 parts by weight in relation to 100 parts by weight of the total amount of the monomers subjected to copolymerization; and the amount of the conjugated diene monomer is preferably 20 to 89.9 parts by weight, more preferably 30 to 84.8 parts by weight, particularly preferably 40 to 79.5 parts by weight in relation to 100 parts by weight of the total amount of the monomers subjected to copolymerization.

The conjugated diene monomer is not particularly limited as long as it is copolymerizable with the $\alpha,\beta$-ethylenically unsaturated nitrile monomer and the carboxyl group-containing monomer. A conjugated diene monomer having 4 to 6 carbon atoms is preferable such as 1,3-butadiene, isoprene, 2,3-dimethyl-1,3-butadiene, and 1,3-pentadiene. 1,3-Butadiene and isoprene are more preferable, and 1,3-butadiene is particularly preferable. These conjugated diene monomer may be used singly or in combinations of two or more thereof.

The content of the conjugated diene monomer unit is preferably 20 to 89.9 wt%, more preferably 30 to 84.8 wt%, even more preferably 40 to 79.5 wt% in relation to the total amount of monomer units. When the content of the conjugated diene monomer unit is too small, rubber elasticity of a cross-linked product to be obtained may decrease. On the other hand, when the content is too large, heat resistance and chemical stability may be impaired. In cases where the copolymer is hydrogenated as described later, the content of the conjugated diene monomer unit is a content including that of the hydrogenated moiety.

The carboxyl group-containing nitrile copolymer rubber (A) used in the present invention may be any one obtained by copolymerizing the $\alpha,\beta$-ethylenically unsaturated nitrile monomer, the carboxyl group-containing monomer, and the conjugated diene monomer together with another monomer (I) copolymerizable therewith. Examples of such another monomer (I) include ethylene, an $\alpha$-olefin monomer, an aromatic vinyl monomer, an $\alpha,\beta$-ethylenically unsaturated carboxylate ester monomer (excluding those corresponding to the "carboxyl group-containing monomer" mentioned above), a fluorine-containing vinyl monomer, a copolymerizable antioxidant and the like.

The $\alpha$-olefin monomer preferably has 3 to 12 carbon atoms, and examples thereof include propylene, 1-butene, 4-methyl-1-pentene, 1-hexene, 1-octene and the like.

Examples of the aromatic vinyl monomer include styrene, $\alpha$-methylstyrene, vinylpyridine and the like.

Examples of the $\alpha,\beta$-ethylenically unsaturated carboxylate ester monomer include a (meth)acrylate ester (collective abbreviation of a "methacrylate ester and an acrylate ester"; the same also applied hereinafter) having an alkyl group having 1 to 18 carbon atoms such as methyl acrylate, ethyl acrylate, n-butyl acrylate, n-dodecyl acrylate, methyl methacrylate, and ethyl methacrylate; a (meth)acrylate ester having an alkoxyalkyl group having 2 to 12 carbon atoms such as methoxymethyl acrylate, methoxyethyl acrylate, and methoxyethyl methacrylate; a (meth)acrylate ester having a cyanoalkyl group having 2 to 12 carbon atoms such as $\alpha$-cyanoethyl acrylate, $\alpha$-cyanoethyl methacrylate, and $\alpha$-

cyanobutyl methacrylate; a (meth)acrylate ester having a hydroxyalkyl group having 1 to 12 carbon atoms such as 2-hydroxyethyl acrylate, 2-hydroxypropyl acrylate, and 2-hydroxyethyl methacrylate; a (meth)acrylate ester having a fluoroalkyl group having 1 to 12 carbon atoms such as trifluoroethyl acrylate and tetrafluoropropyl methacrylate; a dialkyl ester of an $\alpha,\beta$-ethylenically unsaturated dicarboxylic acid such as dimethyl maleate, dimethyl fumarate, dimethyl itaconate and diethyl itaconate; a dialkylamino group-containing $\alpha,\beta$-ethylenically unsaturated carboxylate ester such as dimethylaminomethyl acrylate and diethylaminoethyl acrylate; and the like.

Examples of the fluorine-containing vinyl monomer include fluoroethyl vinyl ether, fluoropropyl vinyl ether, o-trifluoromethyl styrene, vinyl pentafluorobenzoate, difluoroethylene, tetrafluoroethylene and the like.

Examples of the copolymerizable antioxidant include N-(4-anilinophenyl)acrylamide, N-(4-anilinophenyl)methacrylamide, N-(4-anilinophenyl)cinnamamide, N-(4-anilinophenyl)crotonamide, N-phenyl-4-(3-vinylbenzyloxy)aniline, N-phenyl-4-(4-vinylbenzyloxy)aniline and the like.

These other copolymerizable monomers (I) may be used in combinations of two or more thereof. The content of the other monomer unit is preferably 50 wt% or less, more preferably 30 wt% or less, even more preferably 10 wt% or less in relation to the total amount of the monomer units.

The carboxyl group-containing nitrile copolymer rubber (A) has an iodine value of 120 or less, preferably 80 or less, more preferably 25 or less, particularly preferably 15 or less. When the carboxyl group-containing nitrile copolymer rubber (A) has too high an iodine value, heat resistance and ozone resistance of a cross-linked product to be obtained may decrease.

The carboxyl group-containing nitrile copolymer rubber (A) preferably has a polymer Mooney viscosity ($ML_{1+4}$, 100°C) of 15 to 200, more preferably 20 to 150, particularly preferably 30 to 120. When the carboxyl group-containing nitrile copolymer rubber (A) has too low a polymer Mooney viscosity, mechanical strength of a cross-linked product to be obtained may decrease. On the other hand, the carboxyl group-containing nitrile copolymer rubber (A) has too high a polymer Mooney viscosity, processability of the cross-linkable nitrile rubber composition may decrease.

The content of the carboxyl group in the carboxyl group-containing nitrile copolymer rubber (A), i.e., the number of moles of the carboxyl group per 100 g of the carboxyl group-containing nitrile copolymer rubber (A) is preferably $5 \times 10^{-4}$ to $5 \times 10^{-1}$ ephr, more preferably $1 \times 10^{-3}$ to $1 \times 10^{-1}$ ephr, even more preferably $5 \times 10^{-3}$ to $6 \times 10^{-2}$ ephr. When the content of the carboxyl group in the carboxyl group-containing nitrile copolymer rubber (A) is too small, mechanical strength of a cross-linked product to be obtained may decrease. On the other hand, when the content is too large, cold resistance of a cross-linked product may decrease.

The method for producing the carboxyl group-containing nitrile copolymer rubber (A) used in the present invention is not particularly limited. For example, preferred is a method in which the $\alpha,\beta$-ethylenically unsaturated nitrile monomer, the carboxyl group-containing monomer, and the conjugated diene monomer, and the another monomer (I) copolymerizable therewith added if needed are copolymerized. As the method for polymerization, any of known emulsion polymerization methods, suspension polymerization methods, bulk polymerization methods, and solution polymerization methods can be used. The emulsion polymerization method is preferred, in which the control of the polymerization reaction is easy. When the copolymer obtained by copolymerization has an iodine value more than 120, it is convenient to hydrogenate the copolymer (conduct a hydrogenation reaction of the copolymer). In such a case, the method for hydrogenation is not particularly limited, and any known method can be adopted.

<Second step>

The second step of the method of the present invention is a step of mixing an acrylic rubber (b1) with an aromatic polyamine cross-linking agent (b2) to obtain a masterbatch (B).

The acrylic rubber (b1) functions as a binder in the masterbatch (B). The aromatic polyamine cross-linking agent (b2) is dispersed in the masterbatch (B) by the function of the acrylic rubber (b1), and the dispersibility of the aromatic polyamine cross-linking agent (b2) in the carboxyl group-containing nitrile copolymer rubber (A) can be thus enhanced.

The acrylic rubber (b1) is not particularly limited as long as it includes a (meth)acrylate ester monomer (which means an acrylate ester monomer and/or a methacrylate ester monomer; this also applies hereinafter, e.g., methyl (meth)acrylate) unit as its main component (preferably in an amount of 50 wt% or more based on the total amount of monomer units) in its molecule. Examples of the acrylic rubber (b1) used in the present invention include a polymer including 50 to 100 wt% of a (meth)acrylate ester monomer unit as its main component and 0 to 10 wt% of a cross-linkable monomer unit in the molecular thereof and the like.

Examples of the (meth)acrylate ester monomer forming a (meth)acrylate ester monomer unit suitable as the main component of the acrylic rubber (b1) used in the present invention include, but not particularly limited to, an alkyl (meth)acrylate monomer and an alkoxyalkyl (meth)acrylate monomer.

The alkyl(meth)acrylate monomer is preferably, but not particularly limited to, an ester between an alkanol having 1 to 8 carbon atoms and (meth)acrylic acid. Specific examples thereof include methyl (meth)acrylate, ethyl (meth)acrylate, n-propyl (meth)acrylate, isopropyl (meth)acrylate, n-butyl (meth)acrylate, isobutyl (meth)acrylate, n-hexyl (meth)acrylate, 2-ethylhexyl (meth)acrylate, cyclohexyl (meth)acrylate and the like. Among these, ethyl (meth)acrylate and n-butyl (meth)acrylate are preferable, and ethyl acrylate and n-butyl acrylate are particularly preferable. These can be used singly or in combinations of two or more thereof.

The alkoxyalkyl (meth)acrylate monomer is preferably, but not particularly limited to, an ester between an alkoxyalkyl alcohol having 2 to 8 carbon atoms and (meth)acrylic acid. Specific examples thereof include methoxymethyl (meth)acrylate, ethoxymethyl (meth)acrylate, 2-methoxyethyl (meth)acrylate, 2-ethoxyethyl (meth)acrylate, 2-propoxyethyl (meth)acrylate, 2-butoxyethyl (meth)acrylate, 3-methoxypropyl (meth)acrylate, 4-methoxybutyl (meth)acrylate and the like. Among these, 2-ethoxyethyl (meth)acrylate and 2-methoxyethyl (meth)acrylate are preferable, and 2-ethoxyethyl acrylate and 2-methoxyethyl acrylate are particularly preferable. These can be used singly or in combinations of two or more thereof.

The content of the (meth)acrylate ester monomer unit in the acrylic rubber (b1) used in the present invention is preferably 50 to 100 wt%, more preferably 50 to 99.9 wt%, even more preferably 60 to 99.5 wt%, particularly preferably 70 to 99.5 wt%. When the content of the (meth)acrylate ester monomer unit is too small, heat aging resistance of a cross-linked rubber to be obtained may decrease.

In the present invention, the (meth)acrylate ester monomer unit preferably includes 30 to 100 wt% of the alkyl (meth)acrylate monomer unit and 70 to 0 wt% of the alkoxyalkyl (meth)acrylate monomer unit.

Examples of the cross-linkable monomer for forming the cross-linkable monomer unit include, but not particularly limited to, an $\alpha,\beta$-ethylenically unsaturated carboxylic acid monomer, an epoxy group-containing monomer, a halogen atom-containing monomer, a diene monomer and the like.

Examples of the $\alpha,\beta$-ethylenically unsaturated carboxylic acid monomer include, but not particularly limited to, an $\alpha,\beta$-ethylenically unsaturated monocarboxylic acid having 3 to 12 carbon atoms, an $\alpha,\beta$-ethylenically unsaturated dicarboxylic acid having 4 to 12 carbon atoms, a monoester between an $\alpha,\beta$-ethylenically unsaturated dicarboxylic acid having 4 to 12 carbon atoms and an alkanol having 1 to 8 carbon atoms and the like.

Specific examples of the $\alpha,\beta$-ethylenically unsaturated monocarboxylic acid having 3 to 12 carbon atoms include acrylic acid, methacrylic acid, $\alpha$-ethylacrylic acid, crotonic acid, cinnamic acid and the like.

Specific examples of the $\alpha,\beta$-ethylenically unsaturated dicarboxylic acid having 4 to 12 carbon atoms include butenedionic acid such as fumaric acid and maleic acid; itaconic acid; citraconic acid; chloromaleic acid; and the like.

Specific examples of the monoester between an $\alpha,\beta$-ethylenically unsaturated dicarboxylic acid having 4 to 12 carbon atoms and an alkanol having 1 to 8 carbon atoms include mono-chain alkyl butenedioates such as monomethyl fumarate, monoethyl fumarate, mono-n-butyl fumarate, monomethyl maleate, monoethyl maleate, and mono-n-butyl maleate; butenedionic acid monoesters having an alicyclic structure such as monocyclopentyl fumarate, monocyclohexyl fumarate, monocyclohexenyl fumarate, monocyclopentyl maleate, monocyclohexyl maleate, and monocyclohexenyl maleate; itaconic acid monoesters such as monomethyl itaconate, monoethyl itaconate, mono-n-butyl itaconate, and monocyclohexyl itaconate; and the like.

Among these, the mono-chain alkyl butenedioate and butenedionic acid monoesters having an alicyclic structure are preferable. Mono-n-butyl fumarate, mono-n-butyl maleate, monocyclohexyl fumarate, and monocyclohexyl maleate are more preferable, and mono-n-butyl fumarate is even more preferable. These $\alpha,\beta$-ethylenically unsaturated carboxylic acid monomers can be used singly or in combinations of two or more thereof. Among the monomers above mentioned, some dicarboxylic acids may be in the form of an anhydride.

Examples of the epoxy group-containing monomer include, but not particularly limited to, an epoxy group-containing (meth)acrylate ester, an epoxy group-containing ether and the like.

Specific examples of the epoxy group-containing (meth)acrylate ester include glycidyl (meth)acrylate and the like.

Specific examples of the epoxy group-containing ether include allyl glycidyl ether, vinyl glycidyl ether and the like. Among these, glycidyl methacrylate and allyl glycidyl ether are preferred. These epoxy group-containing monomers can be used singly or in combinations of two or more thereof.

Examples of the halogen atom-containing monomer include, but not particularly limited to, unsaturated alcohol esters of a halogen-containing saturated carboxylic acid, haloalkyl (meth)acrylates, haloacyloxyalkyl (meth)acrylates, (haloacetylcarbamoyloxy)alkyl (meth)acrylates, halogen-containing unsaturated ethers, halogen-containing unsaturated ketones, halomethyl group-containing aromatic vinyl compounds, halogen-containing unsaturated amides, haloacetyl group-containing unsaturated monomers and the like.

Specific examples of the unsaturated alcohol ester of a halogen-containing saturated carboxylic acid include vinyl chloroacetate, vinyl 2-chloropropionate, allyl chloroacetate and the like.

Specific examples of the haloalkyl (meth)acrylate include chloromethyl (meth)acrylate, 1-chloroethyl (meth)acrylate, 2-chloroethyl (meth)acrylate, 1,2-dichloroethyl (meth)acrylate, 2-chloropropyl (meth)acrylate, 3-chloropropyl (meth)acrylate, 2,3-dichloropropyl (meth)acrylate and the like.

Specific examples of the haloacyloxyalkyl (meth)acrylate include 2-(chloroacetoxy)ethyl (meth)acrylate, 2-(chloroacetoxy)propyl (meth)acrylate, 3-(chloroacetoxy)propyl (meth)acrylate, 3-(hydroxychloroacetoxy)propyl (meth)acrylate and the like.

Specific examples of the (haloacetylcarbamoyloxy)alkyl (meth)acrylate include 2-(chloroacetylcarbamoyloxy)ethyl (meth)acrylate, 3-(chloroacetylcarbamoyloxy)propyl (meth)acrylate and the like.

Specific examples of the halogen-containing unsaturated ether include chloromethyl vinyl ether, 2-chloroethyl vinyl ether, 3-chloropropyl vinyl ether, 2-chloroethyl allyl ether, 3-chloropropyl allyl ether and the like.

Specific examples of the halogen-containing unsaturated ketone include 2-chloroethyl vinyl ketone, 3-chloropropyl vinyl ketone, 2-chloroethyl allyl ketone and the like.

Specific examples of the halomethyl group-containing aromatic vinyl compound include p-chloromethylstyrene, m-chloromethylstyrene, o-chloromethylstyrene, p-chloromethyl-$\alpha$-methylstyrene and the like.

Specific examples of the halogen-containing unsaturated amide include N-chloromethyl (meth)acrylamide and the like.

Specific examples of the haloacetyl group-containing unsaturated monomer include 3-(hydroxychloroacetoxy)propyl allyl ether, p-vinylbenzyl chloroacetate and the like.

Among these, the unsaturated alcohol ester of a halogen-containing saturated carboxylic acid and the halogen-containing unsaturated ether are preferable. Vinyl chloroacetate and 2-chloroethyl vinyl ether are more preferable, and vinyl chloroacetate is even more preferable. These halogen atom-containing monomers can be used singly or in combinations of two or more thereof.

Examples of the diene monomer include a conjugated diene monomer, and a nonconjugated diene monomer.

Specific examples of the conjugated diene monomer include 1,3-butadiene, isoprene, piperylene and the like.

Specific examples of the nonconjugated diene monomer include ethylidene norbornene, dicyclopentadiene, dicyclopentadienyl (meth)acrylate, 2-dicyclopentadienylethyl (meth)acrylate and the like.

The content of the cross-linkable monomer unit is preferably 0 to 10 wt%, more preferably 0.1 to 10 wt%, more preferably 0.5 to 7 wt%, particularly preferably 1 to 5 wt%.

In addition to the (meth)acrylate ester monomer unit and the cross-linkable monomer unit, the acrylic rubber (b1) used in the present invention may have a unit derived from another monomer copolymerizable with the (meth)acrylate ester monomer and the cross-linkable monomer, if needed.

Examples of the another copolymerizable monomer include, but not particularly limited to, an aromatic vinyl monomer, an $\alpha,\beta$-ethylenically unsaturated nitrile monomer, a monomer having two or more acryloyloxy groups (hereinafter, sometimes referred to as "polyfunctional acrylic monomer"), an olefinic monomer, a vinyl ether compound and the like.

Specific examples of the aromatic vinyl monomer include styrene, $\alpha$-methylstyrene, divinylbenzene and the like.

Specific examples of the $\alpha,\beta$-ethylenically unsaturated nitrile monomer include acrylonitrile, methacrylonitrile and the like.

Specific examples of the polyfunctional acrylic monomer include ethylene glycol di(meth)acrylate, propylene glycol di(meth)acrylate and the like.

Specific examples of the olefinic monomer include ethylene, propylene, 1-butene, 1-octene and the like.

Specific examples of the vinyl ether compound include vinyl acetate, ethyl vinyl ether, and n-butyl vinyl ether and the like.

Among these, styrene, acrylonitrile, methacrylonitrile, ethylene, and vinyl acetate are preferable, and acrylonitrile, methacrylonitrile, ethylene, and vinyl acetate are more preferable.

These other copolymerizable monomers can be used singly or in combinations of two or more thereof. The content of the unit derived from the other monomer in the acrylic rubber (b1) used in the present invention is 0 to 50 wt%, preferably 0 to 49.9 wt%, more preferably 0 to 39.5 wt%, even more preferably 0 to 29.5 wt%, particularly preferably 0 to 29 wt%.

As the acrylic rubber (b1) used in the present invention, an ethylene-acrylate rubber may be used which includes in its molecule 50 to 99.9 wt% of the (meta)acrylate ester monomer unit as the main component, 0 to 10 wt% of the cross-linkable monomer unit, and additionally 0.1 to 50 wt% of an ethylene monomer unit.

The content of the (meta)acrylate ester monomer unit in the ethylene-acrylate rubber is preferably 50 to 99.9 wt%, more preferably 59.9 to 99.4 wt%, even more preferably 67 to 98.5 wt%, particularly preferably 69 to 98 wt%. When the content of the (meth)acrylate ester monomer unit is too small, heat aging resistance of a cross-linked rubber to be obtained may decrease.

The content of the ethylene unit in the ethylene-acrylate rubber is preferably 0.1 to 50 wt%, more preferably 0.5 to 40 wt%, even more preferably 1 to 30 wt%. When the content of the ethylene unit falls within the above range, mechanical properties such as strength of a cross-linked rubber to be obtained can be highly improved.

The content of the cross-linkable monomer unit in the ethylene-acrylate rubber is preferably 0 to 10 wt%, more preferably 0.1 to 10 wt%, even more preferably 0.5 to 7 wt%, particularly preferably 1 to 5 wt%.

The acrylic rubber (b1) used in the present invention can be obtained by polymerization of the monomers mentioned above. As for the manner of the polymerization reaction, any of emulsion polymerization, suspension polymerization, bulk polymerization, high pressure radical polymerization, and solution polymerization can be used. In view of easiness to control the polymerization reaction and the like, the emulsion polymerization at normal pressure is preferable, which is generally used as a conventionally known method for producing an acrylic rubber.

Emulsion polymerization may be of any of a batchwise process, a semi-batchwise process, and a continuous process. Polymerization is conducted usually at a temperature within the range of 0 to 70°C, preferably 5 to 50°C.

The aromatic polyamine cross-linking agent (b2) used in the present invention is a polyamine cross-linking agent having one or more aromatic rings in the molecule thereof. The aromatic polyamine cross-linking agent (b2) is not particularly limited as long as it is (1) a compound having one or more aromatic rings and two or more amino groups in the molecule thereof or (2) a compound which has one or more aromatic rings in the molecule thereof and converts into a compound having two or more amino groups when cross-linking. The aromatic polyamine cross-linking agent (b2) is preferably a compound obtained by replacing each of a plurality of hydrogen atoms of an aromatic hydrocarbon with an amino group or a hydrazide structure (a structure represented by -CONHNH$_2$ wherein CO represents a carbonyl group).

Examples of the aromatic polyamine cross-linking agent (b2) include aromatic polyamines such as 4,4'-methylenedianiline, p-phenylenediamine, 4,4'-diaminodiphenyl ether, 3,4'-diaminodiphenyl ether, 4,4'-(m-phenylenediisopropylidene)dianiline (melting point: 114 to 116°C), 4,4'-(p-phenylenediisopropylidene)dianiline (melting point: 164 to 166°C), 2,2-bis [4-(4-aminophenoxy)phenyl]propane (melting point: 126°C), 4,4'-diaminobenzanilide, 4,4'-bis(4-aminophenoxy)biphenyl, 1,3,5-benzenetriamine, 4,4'-methylenebis(o-chloroaniline), 1,3-bis(3-aminophenoxy)benzene (melting point: 107 to 110°C), 3,3'-diaminophenylsulfone, 4,4'-diaminophenylsulfone, and diaminodihydroxydiphenylsulfone. Among these, in view of highly significantly exhibiting the effect of the present invention, those having 2 to 5 amino groups per molecule are preferable, those having 2 to 3 amino groups per molecule are more preferable, and those having 2 amino groups per molecule are particularly preferable. Those having 1 to 8 aromatic rings per molecule are preferable, those having 2 to 7 aromatic rings per molecule are more preferable, and those having 3 to 6 aromatic rings per molecule are particularly preferable. Those having phenoxy group per molecule are preferable, those having 1 to 4 phenoxy groups per molecule are more preferable, and 2,2-bis[4-(4-aminophenoxy)phenyl]propane is particularly preferable. The aromatic polyamine cross-linking agent (b2) may be used singly or in combinations of two or more thereof.

In the present invention, the aromatic polyamine cross-linking agent (b2) is mixed into the acrylic rubber (b1) to obtain the masterbatch (B) in the second step, and then, the masterbatch (B) obtained is mixed into the carboxyl group-containing nitrile copolymer rubber (A) in the third step described later so that the dispersibility of the aromatic polyamine cross-linking agent (b2) in the carboxyl group-containing nitrile copolymer rubber (A) can be improved. Thus, excellent mechanical strength and heat aging resistance can be imparted to a cross-linked rubber to be obtained.

The weight ratio between the acrylic rubber (b1) and the aromatic polyamine cross-linking agent (b2) in the masterbatch (B) used in the present invention, "the acrylic rubber (b1): the aromatic polyamine cross-linking agent (b2)", is preferably 20:80 to 90:10, more preferably 30:70 to 80:20, even more preferably 30:70 to 70:30. When the content of the acrylic rubber (b1) is too large, the cross-linking reactivity of the cross-linkable rubber composition may decrease. On the other hand, when the content of the acrylic rubber (b1) is too small, dispersibility of the masterbatch (B), in other words, the aromatic polyamine cross-linking agent (b2), in the carboxyl group-containing nitrile copolymer rubber (A) may decrease to thereby decrease the mechanical strength of a cross-linked rubber to be obtained.

When mixing the acrylic rubber (b1) and the aromatic polyamine cross-linking agent (b2) described above in the second step of the method of the present invention, the acrylic rubber (b1) and the aromatic polyamine cross-linking agent (b2) are mixed preferably at a temperature of the system being mixed higher than the melting point of the aromatic polyamine cross-linking agent (b2) by 10°C or more, more preferably by 15°C or more, even more preferably by 20°C or more. The upper limit of the temperature of the system being mixed when mixing the acrylic rubber (b1) and the aromatic polyamine cross-linking agent (b2) is usually, but not particularly limited to, 200°C or less.

When the acrylic rubber (b1) and the aromatic polyamine cross-linking agent (b2) are mixed at a temperature higher than the melting point of the aromatic polyamine cross-linking agent (b2) by 10°C or more, mixing can be carried out with the aromatic polyamine cross-linking agent (b2) appropriately melting, and therefore the aromatic polyamine cross-linking agent (b2) can be mixed into the acrylic rubber (b1) more uniformly. Therefore, when mixing the carboxyl group-containing nitrile copolymer rubber (A) with the masterbatch (B) obtained by mixing the acrylic rubber (b1) with the aromatic polyamine cross-linking agent (b2) in the third step described later, dispersibility of the aromatic polyamine cross-linking agent (b2) in the carboxyl group-containing nitrile copolymer rubber (A) can be appropriately enhanced. As a result, a cross-linked rubber to be obtained can have particularly excellent mechanical strength and heat aging resistance.

Particularly, the acrylic rubber (b1) is used as a polymer component for forming the masterbatch (B) in the present invention and the acrylic rubber (b1) has a high heat-resisting temperature. Therefore, even when mixing to obtain the masterbatch (B) is carried out at a temperature higher than the melting point of the aromatic polyamine cross-linking agent (b2) by 10°C or more, the acrylic rubber (b1) can be effectively prevented from degradation due to such mixing at a high temperature. Thus, by using the acrylic rubber (b1) according to the present invention, the aromatic polyamine cross-linking agent (b2) can be dispersed in the acrylic rubber (b1) uniformly without degradation of the acrylic rubber (b1); and by using the masterbatch (B) thus obtained, the aromatic polyamine cross-linking agent (b2) can be suitably dispersed in the carboxyl group-containing nitrile copolymer rubber (A) in the third step described later. As a result, a cross-linked rubber to be obtained can have particularly excellent mechanical strength and heat aging resistance. From such a viewpoint, the aromatic polyamine cross-linking agent (b2) preferably has a melting point within the range from 100 to 200°C, more preferably within the range from 100 to 180°C.

<Third Step>

The third step of the production method according to the present invention is a step of mixing the masterbatch (B) prepared in the second step with the carboxyl group-containing nitrile copolymer rubber (A) provided in the first step to obtain a cross-linkable rubber composition.

The amount of the masterbatch (B) is preferably 0.1 to 40 parts by weight, more preferably 0.2 to 30 parts by weight and still more preferably 1 to 15 parts by weight in relation to 100 parts by weight of the carboxyl group-containing nitrile copolymer rubber (A). When the amount of the masterbatch (B) is too small, cross-linking may be insufficient, resulting in a decrease in mechanical properties and heat aging resistance of the obtained cross-linked product. On the other hand, when the amount of the masterbatch (B) is too large, fatigue resistance of the cross-linked rubber may decrease.

In addition, in the production method according to the present invention, the amount of the aromatic polyvalent amine cross-linking agent (b2) is preferably 0.01 to 30 parts by weight, more preferably 0.1 to 15 parts by weight and still more preferably 0.5 to 10 parts by weight in relation to 100 parts by weight of the carboxyl group-containing nitrile copolymer rubber (A). When the amount of the aromatic polyvalent amine cross-linking agent (b2) is too small, cross-linking may be insufficient, resulting in a decrease in mechanical properties and compression set resistance of the obtained cross-linked product. On the other hand, when the amount of the aromatic polyvalent amine cross-linking agent (b2) is too large, fatigue resistance of the cross-linked rubber may decrease.

Further, in the third step of the production method according to the present invention, any other ingredients conventionally used in the field of rubber processing may be mixed in addition to the carboxyl group-containing nitrile copolymer rubber (A) and the masterbatch (B). Examples of such ingredients include reinforcing agents such as carbon blacks and silicas, fillers, antioxidizing agents, light stabilizers, scorch inhibitors, plasticizers, processing aids, slip agents, tackifiers, lubricants, flame retardants, acid acceptors, antistatic agents, colorants, silane coupling agents, co-cross-linking agents, cross-linking aids, cross-linking retardants, foaming agents and the like. The amounts of these ingredients can be appropriately selected depending on the purpose of addition.

Examples of the carbon blacks include furnace black, acetylene black, thermal black, channel black, Austin Black, graphite and the like. These can be used singly or in combinations of two or more thereof.

Examples of the silicas include natural silicas such as quartz powder and silica stone powder; synthetic silicas such as anhydrous silicic acid (silica gel, AEROSIL, etc.) and hydrous silicic acid; and the like. Among them, synthetic silicas are preferred. The silicas can be silicas surface-treated with silane coupling agents or the like.

Specific examples of the silane coupling agents include, but not particularly limited to, sulfur-containing silane coupling agents such as γ-mercaptopropyltrimethoxysilane, γ-mercaptomethyltrimethoxysilane, γ-mercaptomethyltriethoxysilane, γ-mercaptohexamethyldisilazane, bis(3-triethoxysilylpropyl)tetrasulfane and bis(3-triethoxysilylpropyl)disulfane; epoxy group-containing silane coupling agents such as γ-glycidoxypropyltrimethoxysilane, γ-glycidyloxypropyltrimethoxysilane, β-(3,4-epoxycyclohexyl)ethyltrimethoxysilane, and γ-glycidoxypropylmethyldiethoxysilane; amino group-containing silane coupling agents such as N-(β-aminoethyl)-γ-aminopropyltrimethoxysilane, γ-aminopropyltrimethoxysilane, γ-aminopropyltriethoxysilane, N-2-(aminoethyl)-3-aminopropyltriethoxysilane, 3-triethoxysilyl-N-(1,3-dimethyl-butylidene)propylamine and N-phenyl-3-aminopropyltrimethoxysilane; (meth)acryloxy group-containing silane coupling agents such as γ-methacryloxypropyltrimethoxysilane, γ-methacryloxypropyltris(β-methoxyethoxy)silane, γ-methacryloxypropylmethyldimethoxysilane, γ-methacryloxypropylmethyldiethoxysilane, γ-methacryloxypropyltriethoxysilane and 3-acryloxypropyltrimethoxysilane; vinyl group-containing silane coupling agents such as vinyltrimethoxysilane, vinyltriethoxysilane, vinyltris(β-methoxyethoxy)silane, vinyltrichlorosilane and vinyltriacetoxysilane; chloropropyl group-containing silane coupling agents such as 3-chloropropyltrimethoxysilane; isocyanate group-containing silane coupling agents such as 3-isocyanatepropyltriethoxysilane; styryl group-containing silane coupling agents such as p-styryltrimethoxysilane; ureido group-containing silane coupling agents such as 3-ureidopropyltriethoxysilane; allyl group-containing silane coupling agents such as diallyldimethylsilane; alkoxy group-containing silane coupling agents such as tetraethoxysilane; phenyl group-containing silane coupling agents such as diphenyldimethoxysilane; fluoro group-containing silane coupling agents such as trifluoropropyltrimethoxysilane; alkyl group-containing silane coupling agents such as isobutyltrimethoxysilane and cyclohexylmethyldimethoxysilane; aluminum-based coupling agents such as acetoalkoxyaluminum diisopropylate; titanate-based coupling agents such as isopropyl triisostearoyl titanate, isopropyl tris(dioctylpyrophosphate)titanate, isopropyl tri(N-aminoethyl-aminoethyl)titanate, tetraoctyl bis(ditridecylphosphite)titanate, tetra(2,2-diallyloxymethyl-1-butyl)bis(ditridecyl)phosphite titanate, bis(dioctylpyrophosphate)oxyacetate titanate, bis(dioctylpyrophosphate)ethylene titanate, tetraisopropyl bis(dioctylphosphite)titanate and isopropyl triisostearoyl titanate; and the like. These can be used singly or in combinations of two or more thereof.

The co-cross-linking agents are not particularly limited, but are preferably low molecular compounds or high molecular compounds having two or more radical-reactive unsaturated groups in the molecule. Examples of the co-cross-linking agents include multifunctional vinyl compounds such as divinylbenzene and divinylnaphthalene; isocyanurates such as triallyl isocyanurate and trimethallyl isocyanurate; cyanurates such as triallyl cyanurate; maleimides such as N,N'-m-phenylenedimaleimide; allyl esters of polyvalent acids such as diallyl phthalate, diallyl isophthalate, diallyl maleate, diallyl fumarate, diallyl sebacate and triallyl phosphate; diethylene glycol bis(allyl carbonate); allyl ethers such as ethylene glycol diallyl ether, triallyl ether of trimethylolpropane and partial allyl ether of pentaerythritol; allyl-modified resins such as allylated novolac and allylated resol resin; tri- to penta-functional methacrylate compounds and acrylate compounds such as trimethylolpropane trimethacrylate and trimethylolpropane triacrylate; and the like. These can be used singly or in combinations of two or more thereof.

Furthermore, in the third step of the production method according to the present invention, rubbers other than the carboxyl group-containing nitrile copolymer rubber (A) and the acrylic rubber (b1) may be added to the extent that they do not impair the effect of the present invention.

Examples of such rubbers include styrene-butadiene copolymer rubber, polybutadiene rubber, ethylene-propylene copolymer rubber, ethylene-propylene-diene terpolymer rubber, epichlorohydrin rubber, urethane rubber, chloroprene rubber, silicone rubber, fluororubber, natural rubber, polyisoprene rubber and the like.

When other rubbers than the carboxyl group-containing nitrile copolymer rubber (A) and the acrylic rubber (b1) are added, the amount of the other rubbers is preferably 60 parts by weight or less, more preferably 30 parts by weight or less and still more preferably 10 parts by weight or less, in relation to 100 parts by weight of the total of the carboxyl group-containing nitrile copolymer rubber (A) and the acrylic rubber (b1).

In the third step of the production method according to the present invention, the masterbatch (B) is mixed with the carboxyl group-containing nitrile copolymer rubber (A) preferably in a nonaqueous system. For example, in the third step, when other ingredients than the carboxyl group-containing nitrile copolymer rubber (A) and the masterbatch (B) are added, it is preferable to use the method in which other ingredients than the masterbatch (B) and heat-unstable cross-linking aids and the like are subjected to primary kneading with a mixer such as a Banbury mixer, an intermixer or a kneader and then transferred to an open roll kneading machine or the like, and thereafter the masterbatch (B) and the heat-unstable cross-linking aids and the like are added thereto and subjected to secondary kneading. Primary kneading is typically performed at a temperature of 10 to 200°C and preferably 30 to 180°C for 1 minute to 1 hour and preferably for 1 to 30 minutes, and secondary kneading is typically performed at a temperature of 10 to 100°C and preferably 20 to 60°C for 1 minute to 1 hour and preferably for 1 to 30 minutes.

<Method for Producing Cross-Linked Rubber>

The method for producing a cross-linked rubber according to the present invention is a method in which the cross-linkable rubber composition obtained by the above-mentioned method for producing a cross-linkable rubber composition according to the present invention is cross-linked to obtain a cross-linked rubber.

Examples of the method for producing a cross-linked rubber according to the present invention include a method in which the cross-linkable rubber composition obtained in the above-mentioned method for producing a cross-linkable rubber composition according to the present invention is subjected to molding, for example with a molding machine corresponding to a desired shape, such as an extruding machine, an injection molding machine, a compressing machine or rolls, and to a cross-linking reaction by heating to fix its shape as a cross-linked product to obtain a cross-linked rubber, and the like. In this case, cross-linking may be performed after pre-molding or may be performed simultaneously with molding. The molding temperature is typically 10 to 200°C and preferably 25 to 120°C. The cross-linking temperature is typically 100 to 200°C and preferably 130 to 190°C. The cross-linking time is typically 1 minute to 24 hours, preferably 2 minutes to 12 hours and particularly preferably 3 minutes to 6 hours.

Depending on the shape and size of the cross-linked rubber, the inside of the cross-linked rubber may not have been sufficiently cross-linked even if the surface has been cross-linked. In that case, secondary cross-linking may be performed by further heating.

The cross-linking method can be appropriately selected from general methods used for cross-linking a rubber, such as press cross-linking, steam cross-linking and oven cross-linking.

The above-mentioned cross-linked rubber obtained by the production method according to the present invention is excellent in mechanical strength and heat aging resistance, and can be used, by taking advantage of such properties, in a wide variety of applications, for example, in various sealing materials such as O-rings, packings, diaphragms, oil seals, shaft seals, bearing seals, well head seals, seals for pneumatic equipment, seals for sealing freon or fluorohydrocarbons or carbon dioxide used for air conditioner-cooling systems and refrigerator compressors for air-conditioning systems, seals for sealing supercritical carbon dioxide or subcritical carbon dioxide used in a cleaning medium for precision cleaning, seals for rolling devices (such as rolling bearings, automotive hub units, automotive water pumps, linear guide devices and ball screws), valves and valve seats, BOP (Blow Out Preventer) and platters; in various gaskets such as intake manifold gaskets attached to a connecting portion between an intake manifold and a cylinder head, cylinder head gaskets attached to a connecting portion between a cylinder block and a cylinder head, rocker cover gaskets attached to a connecting portion between a rocker cover and a cylinder head, oil pan gaskets attached to a connecting portion between an oil pan and a cylinder block or a transmission case, gaskets for fuel cell separators attached between a pair of housings sandwiching a unit cell having a positive electrode, an electrolyte plate and a negative electrode, and gaskets for top covers of hard disk drives; in various rolls such as printing rolls, iron-making rolls, paper-making rolls, industrial rolls and rolls for office machines; in various belts such as flat belts (such as film core flat belts, cord flat belts, laminated flat belts and single flat belts), V belts (such as wrapped V belts and low edge V belts), V-ribbed belts (such as single V-ribbed belts, double V-ribbed belts, wrapped V-ribbed belts, rear rubber V-ribbed belts and upper cog V-ribbed belts), CVT belts, timing belts, toothed belts and conveyor belts; in various hoses such as fuel hoses, turbo air hoses, oil hoses, radiator hoses, heater hoses, water hoses, vacuum brake hoses, control hoses, air conditioner hoses, brake hoses, power steering hoses, air hoses, marine hoses, riser hoses and flow line hoses; in various boots such as CVJ boots, propeller shaft boots, constant velocity joint boots and rack-and-pinion boots; in damping material rubber parts such as cushioning materials, dynamic dampers, rubber couplings, air springs and vibration insulators; in dust covers, automobile interior parts, tires, coated cables, shoe soles, electromagnetic shields, adhesives such as adhesives for flexible printed circuit boards, and fuel cell separators; as well as in the electronics field.

EXAMPLES

Hereinafter, the present invention will be described specifically by way of Examples and Comparative Examples. In what follows, unless otherwise specified, "parts" are based on weight. Note that the tests and the evaluations were carried out as follows.

<Iodine Value>

The iodine value of the carboxyl group-containing nitrile copolymer rubber was measured in accordance with JIS K6235.

<Content of Carboxyl Group>

To 0.2 g of a 2-mm square piece of a carboxyl group-containing nitrile copolymer rubber were added 20 ml of ethanol and 10 ml of water. The mixture was titrated by using a 0.02 N hydrous ethanol solution of potassium hydroxide and thymolphthalein as an indicator with stirring at room temperature to determine the content of the carboxyl group as the number of moles of the carboxyl group in 100 g of the carboxyl group-containing nitrile copolymer rubber (units: ephr).

<Content of Acrylonitrile Unit>

The content of the acrylonitrile unit was calculated in accordance with JIS K6384 from the nitrogen content in the carboxyl group-containing nitrile copolymer rubber measured by the Kjeldahl method (units: wt%).

<Mooney Viscosity>

The Mooney viscosity (polymer Mooney) of the carboxyl group-containing nitrile copolymer rubber was measured in accordance with JIS K6300 (units: ($ML_{1+4}$, 100°C)).

<Dispersibility of Cross-Linking Agents>

By using a cross-linkable rubber composition after secondary kneading, the dispersibility of a cross-linking agent was evaluated by visually observing the mass of the cross-linking agent (poor dispersion) on or in the composition. The dispersibility of the cross-linking agent was evaluated according to the following criteria.

Good: the mass of the cross-linking agent cannot be visually observed (good dispersion)
Poor: the mass of the cross-linking agent can be visually observed (poor dispersion)

<Original State Physical Properties (Tensile Strength, Elongation at Break)>

The cross-linkable rubber composition was subjected to primary cross-linking by placing it in a mold of 15 cm in length, 15 cm in width and 0.2 cm in depth and pressing it at 170°C for 20 minutes while pressurizing it at a pressing pressure of 10 MPa. Then, the obtained primary cross-linked product was subjected to secondary cross-linking by further heating it at 170°C for 4 hours in a geer oven to obtain a sheet-like cross-linked rubber. The obtained cross-linked rubber was punched with a No. 3 type dumbbell to prepare a test piece. Next, by using the obtained test piece, the tensile strength and the elongation at break of the cross-linked rubber were measured in accordance with JIS K6251.

<Heat Aging Resistance>

By using the sheet-like cross-linked rubber prepared in the same manner as in the evaluation of the original state physical properties, elongation at break after 168 hours at 170°C was measured in accordance with JIS K6257 (a normal oven method). From the elongation at break measured by the evaluation of original state physical properties and the elongation at break after heat aging, the elongation change rate (%) after heat aging was calculated according to the following formula:

$$\text{Elongation change rate (\%) after heat aging} = 100 \times (\text{elongation at break after heat aging} - \text{elongation at break in original state})/\text{elongation at break in original state.}$$

<Compression Set>

The cross-linkable rubber composition was subjected to primary cross-linking by pressing it with the use of a mold at a temperature of 170°C for 25 minutes to obtain a cylindrical primary cross-linked product of 29 mm in diameter and 12.7 mm in height. Then, the obtained primary cross-linked product was subjected to secondary cross-linking by further heating it at 170°C for 4 hours in a geer oven to obtain a pressed cross-linked product. By using the obtained pressed cross-linked product, in accordance with JIS K6262, the compression set was measured after keeping it in a state of being compressed by 25% in an environment of 150°C for 168 hours.

The smaller this value is, the more excellent the compression set resistance is.

<Production Example 1: Production of Carboxyl Group-Containing Nitrile Copolymer Rubber (A-1)>

To a metallic bottle were charged, in the following order, 180 parts of ion exchanged water, 25 parts of an aqueous solution of sodium dodecylbenzenesulfonate having a concentration of 10 wt%, 37 parts of acrylonitrile, 6 parts of mono-n-butyl maleate and 0.75 part of t-dodecyl mercaptan (a molecular weight modifier). After replacing the internal gas three times by nitrogen, 57 parts of 1,3-butadiene was charged to the metallic bottle. The metallic bottle was kept at 5°C, 0.1 part of cumene hydroperoxide (a polymerization initiator) was charged thereto, and a polymerization reaction was performed for 16 hours while rotating the metallic bottle. Thereafter, 0.1 part of an aqueous hydroquinone solution having a concentration of 10 wt% (a polymerization terminator) was added to the metallic bottle to terminate the polymerization reaction, followed by removal of the residual monomers with a rotary evaporator at a water temperature of 60°C to obtain a latex of an acrylonitrile-butadiene-mono-n-butyl maleate copolymer rubber (solid content concentration: approximately 30 wt%).

Then, a palladium catalyst (a solution prepared by mixing a 1 wt% palladium acetate acetone solution and an equal weight of ion exchanged water) was added in an autoclave in such a way that the content of palladium was 1,000 ppm in relation to the weight of the rubber contained in the latex, and then subjected to a hydrogenation reaction at a hydrogen pressure of 3 MPa and a temperature of 50°C for 6 hours to obtain a latex of a carboxyl group-containing nitrile copolymer rubber (A-1).

The obtained latex of the carboxyl group-containing nitrile copolymer rubber (A-1) was coagulated by adding two volumes of methanol to one volume of the latex and then vacuum dried at 60°C for 12 hours to obtain the carboxyl group-containing nitrile copolymer rubber (A-1). The obtained carboxyl group-containing nitrile copolymer rubber (A-1) had an iodine value of 10, a carboxyl group content of $3.2 \times 10^{-2}$ ephr and a polymer Moony viscosity ($ML_{1+4}$, 100°C) of 45.

The composition of the carboxyl group-containing nitrile copolymer rubber (A-1), which was calculated from the content of acrylonitrile unit measured by the Kjeldahl method, the content of mono-n-butyl maleate unit determined from the carboxyl group content and the 1,3-butadiene unit as the balance, was: 35.6 wt% of the acrylonitrile unit, 58.8 wt% of the butadiene unit (including the hydrogenated one) and 5.6 wt% of the mono-n-butyl maleate unit.

<Production Example 2: Production of Carboxyl Group-Containing Nitrile Copolymer Rubber (A-2)>

The carboxyl group-containing nitrile copolymer rubber (A-2) was obtained in the same manner as in Production Example 1 except that the amount of acrylonitrile was changed to 45 parts, the amount of mono-n-butyl maleate was changed to 6 parts and the amount of 1,3-butadiene was changed to 49 parts. The obtained carboxyl group-containing nitrile copolymer rubber (A-2) had a composition consisting of 45.4 wt% of the acrylonitrile unit, 50.6 wt% of the butadiene unit (including the hydrogenated one) and 4.9 wt% of the mono-n-butyl maleate unit.

<Production Example 3: Production of Carboxyl Group-Containing Nitrile Copolymer Rubber (A-3)>

The carboxyl group-containing nitrile copolymer rubber (A-3) was obtained in the same manner as in Production Example 1 except that the amount of acrylonitrile was changed to 23 parts, the amount of mono-n-butyl maleate was changed to 6.5 parts and the amount of 1,3-butadiene was changed to 40 parts, and 30.5 parts of methoxyethyl acrylate was further added. The obtained carboxyl group-containing nitrile copolymer rubber (A-3) had a composition consisting of 24 wt% of the acrylonitrile unit, 46.6 wt% of the butadiene unit (including the hydrogenated one), 6.5 wt% of the mono-n-butyl maleate unit and 22.9 wt% of the methoxyethyl acrylate unit.

<Production Example 4: Production of Carboxyl Group-Containing Nitrile Copolymer Rubber (A-4)>

The carboxyl group-containing nitrile copolymer rubber (A-4) was obtained in the same manner as in Production Example 1 except that the amount of acrylonitrile was changed to 21 parts, the amount of mono-n-butyl maleate was changed to 5 parts and the amount of 1,3-butadiene was changed to 44 parts, and 30 parts of butyl acrylate was further added. The obtained carboxyl group-containing nitrile copolymer rubber (A-4) had a composition consisting of 20.8 wt% of the acrylonitrile unit, 44.2 wt% of the butadiene unit (including the hydrogenated one), 4.9 wt% of the mono-n-butyl maleate unit and 30.1 wt% of the butyl acrylate unit.

<Production Example 5: Production of Acrylic Rubber (b1-1)>

To a polymerization reactor equipped with a thermometer and a stirrer were charged 200 parts of water, 3 parts of sodium lauryl sulfate, 60 parts of ethyl acrylate and 40 parts of butyl acrylate. Thereafter, after two cycles of evacuation and replacement by nitrogen to sufficiently remove oxygen, 0.005 part of cumene hydroperoxide and 0.002 part of sodium formaldehyde sulfoxylate were added to the mixture, and emulsion polymerization was initiated under a normal pressure at a temperature of 30°C to allow the charged and added ingredients to react until the polymerization conversion reached 95%. The obtained emulsion polymerization product in the form of liquid was coagulated with an aqueous solution of calcium chloride, washed with water and dried to obtain an acrylic rubber (b1-1). The obtained acrylic rubber (b1-1) had a composition consisting of 60 wt% of the ethyl acrylate unit and 40 wt% of the butyl acrylate unit.

<Production Example 6: Production of Acrylic Rubber (b1-2)>

The acrylic rubber (b1-2) was obtained in the same manner as in Production Example 5 except that the amount of ethyl acrylate was changed to 40 parts and the amount of butyl acrylate was changed to 30 parts, and 30 parts of methoxyethyl acrylate was further added. The obtained acrylic rubber (b1-2) had a composition consisting of 40 wt% of the ethyl acrylate unit, 30 wt% of the butyl acrylate unit and 30 wt% of the methoxyethyl acrylate unit.

<Production Example 7: Production of Masterbatch (B-1)>

Fifty parts of the acrylic rubber (b1-1) obtained in Production Example 5 was masticated for 1 minute in a Brabender type mixer having a capacity of 55 ml, followed by addition of 50 parts of 2,2-bis[4-(4-aminophenoxy)phenyl] propane (BAPP, an aromatic polyvalent amine cross-linking agent (b2), melting point: 126°C) and heating to a temperature of 150°C. The mixture was kneaded for 5 minutes in a state in which 2,2-bis[4-(4-aminophenoxy)phenyl]propane was molten to produce a masterbatch (B-1) having an acrylic rubber (b1-1):2,2-bis[4-(4-aminophenoxy)phenyl]propane (BAPP) weight ratio of 50:50.

<Production Example 8: Production of Masterbatch (B-2)>

The masterbatch (B-2) having an acrylic rubber (b1-1):2,2-bis[4-(4-aminophenoxy)phenyl]propane (BAPP) weight ratio of 70:30 was produced in the same manner as in Production Example 7 except that the amount of the acrylic rubber (b1-1) was changed to 70 parts and the amount of 2,2-bis[4-(4-aminophenoxy)phenyl]propane was changed to 30 parts.

<Production Example 9: Production of Masterbatch (B-3)>

The masterbatch (B-3) having an acrylic rubber (b1-2):2,2-bis[4-(4-aminophenoxy)phenyl]propane (BAPP) weight ratio of 50:50 was produced in the same manner as in Production Example 7 except that 50 parts of the acrylic rubber (b1-2) obtained in Production Example 2 was used in place of 50 parts of the acrylic rubber (b1-1).

<Production Example 10: Production of Masterbatch (B-4)>

The masterbatch (B-4) having an ethylene acrylate rubber (b1-3):2,2-bis[4-(4-aminophenoxy)phenyl]propane (BAPP) weight ratio of 50:50 was produced in the same manner as in Production Example 7 except that 50 parts of an ethylene acrylate rubber (b1-3) (trade name "Vamac(R) ULTRA IP," made by E. I. Du Pont de Nemours and Company) was used in place of 50 parts of the acrylic rubber (b1-1) .

<Production Example 11: Production of Masterbatch (B'-5)>

The masterbatch (B'-5) having a hydrogenated nitrile rubber:2,2-bis[4-(4-aminophenoxy)phenyl]propane (BAPP) weight ratio of 50:50 was produced in the same manner as in Production Example 7 except that 50 parts of a hydrogenated nitrile rubber (trade name: Zetpol 2000 L, made by Zeon Corporation; acrylonitrile unit content: 36 wt%, butadiene unit (including the hydrogenated one): 64 wt%, iodine value: 4, Mooney viscosity: 65) was used in place of 50 parts of the acrylic rubber (b1-1).

<Production Example 12: Production of Masterbatch (B'-6)>

The masterbatch (B'-6) having a hydrogenated nitrile rubber:2,2-bis[4-(4-aminophenoxy)phenyl]propane (BAPP) weight ratio of 50:50 was produced in the same manner as in Production Example 11 except that the temperature during kneading was changed to 120°C.

<Example 1>

By using a Banbury mixer, the following ingredients were added to 100 parts of the carboxyl group-containing nitrile copolymer rubber (A-1) obtained in Production Example 1 and mixed therewith at 50°C for 5 minutes: 40 parts of FEF carbon black (trade name: Seast SO, made by Tokai Carbon Co., Ltd.), 5 parts of tri-2-ethylhexyl) trimellitate (trade name: Adekacizer C-8, made by ADEKA Corporation; a plasticizer), 1.5 parts of 4,4'-di-($\alpha,\alpha$'-dimethylbenzyl)diphe-nylamine (trade name: Naugard 445, made by Crompton Corporation; an antioxidant), 1 part of stearic acid (a cross-linking promoter) and 1 part of a polyoxyethylene alkyl ether phosphoric acid ester (trade name: Phosphanol RL210, made by Toho Chemical Industry Co., Ltd.; a processing aid). Next, the obtained mixture was transferred to a roll at 50°C, and 12.6 parts of the masterbatch (B-1) produced in Production Example 7 and 4 parts of 1,8-diazabicyclo[5.4.0]-undecene-7 (DBU) (trade name "RHENOGRAN XLA-60 (GE2014)," made by Rhein Chemie Corporation; a product composed of 60% of DBU (including its zinc dialkyldiphosphate salt)) were added thereto and kneaded to obtain a cross-linkable rubber composition.
The cross-linkable composition thus obtained was subjected to the evaluations and tests for each of the dispersibility of cross-linking agents, original state physical properties (tensile strength, elongation at break), heat aging resistance and compression set. The results thus obtained are shown in Table 1.

<Examples 2 to 4>

Each of cross-linkable rubber compositions was obtained in the same manner as in Example 1 except that each of the masterbatches (B-2) to (B-4) obtained in Production Examples 8 to 10 was used, in place of the masterbatch (B-1), in the amount shown in Table 1, and it was subjected to the evaluation in the same manner as in Example 1. The results thus obtained are shown in Table 1.

<Examples 5 to 7>

Each of cross-linkable rubber compositions was obtained in the same manner as in Example 1 except that each of the carboxyl group-containing nitrile copolymer rubbers (A-1) to (A-3) obtained in Production Examples 2 to 4 was used, in place of the carboxyl group-containing nitrile copolymer rubber (A-1), in the amount shown in Table 1, and the amounts of the masterbatch (B-1) and carbon black were changed to the amounts shown in Table 1, and was subjected to the evaluation in the same manner as in Example 1. The results thus obtained are shown in Table 1.

<Example 8>

A cross-linkable rubber composition was obtained in the same manner as in Example 1 except that 50 parts of silica (trade name "Nipsil ER," made by Tosoh Silica Corporation) was used in place of 40 parts of FEF carbon black and 5 parts of polyether ester (trade name "Adekacizer RS-700," made by ADEKA Corporation; a plasticizer) was used in place of 5 parts of tri-2-ethylhexyl trimellitate, and was subjected to the evaluation in the same manner as in Example 1. The results thus obtained are shown in Table 1.

<Examples 9 to 11>

Each of cross-linkable rubber compositions was obtained in the same manner as in Example 8 except that each of the carboxyl group-containing nitrile copolymer rubbers (A-1) to (A-3) obtained in Production Examples 2 to 4 was used, in place of the carboxyl group-containing nitrile copolymer rubber (A-1), in the amount shown in Table 1, and the amounts of the masterbatch (B-1) and silica were changed to the amounts shown in Table 1, and was subjected to the evaluation in the same manner as in Example 8. The results thus obtained are shown in Table 1.

<Example 12>

A cross-linkable rubber composition was obtained in the same manner as in Example 8 except that 0.5 parts of γ-aminopropyltriethoxysilane (trade name "Dynasylan(R) AMEO," made by Evonik Industries AG; a silane coupling agent) was further added, and was subjected to the evaluation in the same manner as in Example 8. The results thus obtained are shown in Table 1.

<Examples 13 to 15>

Each of cross-linkable rubber compositions was obtained in the same manner as in Example 12 except that each of the carboxyl group-containing nitrile copolymer rubbers (A-1) to (A-3) obtained in Production Examples 2 to 4 was used, in place of the carboxyl group-containing nitrile copolymer rubber (A-1), in the amount shown in Table 1, and the amounts of the masterbatch (B-1) and silica were changed to the amounts shown in Table 1, and was subjected to the evaluation in the same manner as in Example 12. The results thus obtained are shown in Table 1.

<Example 16>

A cross-linkable rubber composition was obtained in the same manner as in Example 8 except that 0.5 parts of γ-glycidyloxypropyltrimethoxysilane (trade name "Dynasylan(R) GLYMO," made by Evonik Industries AG; a silane coupling agent) was further added, and was subjected to the evaluation in the same manner as in Example 8. The results thus obtained are shown in Table 2.

<Examples 17 to 19>

Each of cross-linkable rubber compositions was obtained in the same manner as in Example 16 except that each of the carboxyl group-containing nitrile copolymer rubbers (A-1) to (A-3) obtained in Production Examples 2 to 4 was used, in place of the carboxyl group-containing nitrile copolymer rubber (A-1), in the amount shown in Table 2, and the amounts of the masterbatch (B-1) and silica were changed to the amounts shown in Table 2, and was subjected to the evaluation in the same manner as in Example 16. The results thus obtained are shown in Table 2.

<Comparative Example 1>

A cross-linkable rubber composition was obtained in the same manner as in Example 1 except that 6.3 parts of 2,2-bis[4-(4-aminophenoxy)phenyl]propane was used as it was without masterbatching in place of 12.6 parts of the masterbatch (B-1), and was subjected to the evaluation in the same manner as in Example 1. The results thus obtained are shown in Table 2.

<Comparative Example 2>

A cross-linkable rubber composition was obtained in the same manner as in Example 1 except that 12.6 parts of the masterbatch (B'-5) obtained in Production Example 11 was used in place of 12.6 parts of the masterbatch (B-1), and was subjected to the evaluation in the same manner as in Example 1. The results thus obtained are shown in Table 2.

<Comparative Example 3>

A cross-linkable rubber composition was obtained in the same manner as in Example 1 except that 12.6 parts of the masterbatch (B'-6) obtained in Production Example 12 was used in place of 12.6 parts of the masterbatch (B-1), and was subjected to the evaluation in the same manner as in Example 1. The results thus obtained are shown in Table 2.

<Comparative Example 4>

A cross-linkable rubber composition was obtained in the same manner as in Example 1 except that 2.4 parts of hexamethylenediamine carbamate (trade name: Diak#1, made by Du Pont Dow Elastomer Corporation; an aliphatic polyvalent amine cross-linking agent) was used in place of 12.6 parts of the masterbatch (B-1), and was subjected to the evaluation in the same manner as in Example 1. The results thus obtained are shown in Table 2.

<Comparative Example 5>

A cross-linkable rubber composition was obtained in the same manner as in Example 1 except that 5 parts of N,N'-dicinnamylidene-1,6-hexanediamine (trade name "Diak#3," made by Du Pont Dow Elastomer Corporation) was used in place of 12.6 parts of the masterbatch (B-1), and was subjected to the evaluation in the same manner as in Example 1. The results thus obtained are shown in Table 2.

[Table 1]

TABLE 1

| | | Examples | | | | | | | | | | | | | | |
|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 |
| Composition of cross-linkable rubber composition | | | | | | | | | | | | | | | | |
| Carboxyl group-containing nitrile copolymer rubber (A-1) | (parts) | 100 | 100 | 100 | 100 | | | | 100 | | | | 100 | | | |
| Carboxyl group-containing nitrile copolymer rubber (A-2) | (parts) | | | | | 100 | | | | 100 | | | 100 | | | |
| Carboxyl group-containing nitrile copolymer rubber (A-3) | (parts) | | | | | | 100 | | | | 100 | | | | 100 | |
| Carboxyl group-containing nitrile copolymer rubber (A-4) | (parts) | | | | | | | 100 | | | | 100 | | | | 100 |
| Masterbatch (B-1) (ACM(b1-1)/BAPP= 50/50 mixed at 150°C) | (parts) | 12.6 | | | | 10.5 | 14.1 | 10.5 | 12.6 | 10.5 | 14.1 | 10.5 | 12.6 | 10.5 | 14.1 | 10.5 |
| Masterbatch (B-2) (ACM(b1-1)/BAPP= 70/30 mixed at 150°C) | (parts) | | 21 | | | | | | | | | | | | | |
| Masterbatch (B-3) (ACM(b1-2)/BAPP= 50/50 mixed at 150°C) | (parts) | | | 12.6 | | | | | | | | | | | | |
| Masterbatch (B-4) (AEM(b1-3)/BAPP= 50/50 mixed at 150°C) | (parts) | | | | 12.6 | | | | | | | | | | | |
| Masterbatch (B'-5) (HNBR/BAPP= 50/50 mixed at 150°C) | (parts) | | | | | | | | | | | | | | | |
| Masterbatch (B'-6) (HNBR/BAPP= 50/50 mixed at 120°C) | (parts) | | | | | | | | | | | | | | | |
| 2,2-Bis[4-(4-aminophenoxy)phenyl]propane (BAPP) | (parts) | | | | | | | | | | | | | | | |
| Hexamethylenediamine carbamate | (parts) | | | | | | | | | | | | | | | |
| N,N'-Dicinnamylidene-1,6-hexanediamine | (parts) | | | | | | | | | | | | | | | |
| Carbon black | (parts) | 40 | 40 | 40 | 40 | 40 | 45 | 50 | | | | | | | | |
| Silica | (parts) | | | | | | | | 50 | 55 | 60 | 60 | 50 | 55 | 60 | 60 |
| Tri-2-ethylhexyl trimellitate | (parts) | 5 | 5 | 5 | 5 | 5 | 5 | 5 | | | | | | | | |
| Polyether ester | (parts) | | | | | | | | 5 | 5 | 5 | 5 | 5 | 5 | 5 | 5 |
| 4,4'-Di-(α,α-dimethylbenzyl)diphenylamine | (parts) | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| Stearic acid | (parts) | 1 | 1 | 1 | 1 | 1 | 1 | 1 | 1 | 1 | 1 | 1 | 1 | 1 | 1 | 1 |
| Polyoxyethylene alkyl ether phosphoric acid ester | (parts) | 1 | 1 | 1 | 1 | 1 | 1 | 1 | 1 | 1 | 1 | 1 | 1 | 1 | 1 | 1 |
| γ-Aminopropyltriethoxysilane | (parts) | | | | | | | | | | | | 0.5 | 0.5 | 0.5 | 0.5 |
| γ-Glycidyloxypropyltrimethoxysilane | (parts) | | | | | | | | | | | | | | | |
| 1,8-Diazabicyclo[5.4.0]-undecene-7 (60% product) | (parts) | 4 | 4 | 4 | 4 | 4 | 4 | 4 | 4 | 4 | 4 | 4 | 4 | 4 | 4 | 4 |
| Evaluation | | | | | | | | | | | | | | | | |
| Dispersibility of cross-linking agent in cross-linkable rubber composition | | Good | Good | Good | Good | Good | Good | Good | Good | Good | Good | Good | Good | Good | Good | Good |
| Tensile strength | (MPa) | 21.1 | 20.7 | 21.1 | 20.7 | 23.5 | 19.7 | 20.1 | 24.2 | 28 | 21.7 | 21.3 | 24.2 | 26.5 | 21.1 | 20 |
| Elongation at break | (%) | 230 | 220 | 230 | 220 | 250 | 160 | 190 | 270 | 310 | 210 | 240 | 170 | 210 | 130 | 140 |
| Elongation change rate after heat aging | (%) | -12 | -12 | -12 | -12 | -12 | -12 | -12 | -10 | -10 | -10 | -10 | -8 | -8 | -8 | -8 |
| Rate of compression set | (%) | 20 | 21 | 22 | 22 | 23 | 23 | 24 | 31 | 29 | 30 | 30 | 24 | 20 | 21 | 21 |

EP 3 363 850 A1

[Table 2]

TABLE 2

| | | Examples | | | | Comparative Examples | | | | |
|---|---|---|---|---|---|---|---|---|---|---|
| | | 16 | 17 | 18 | 19 | 1 | 2 | 3 | 4 | 5 |
| **Composition of cross-linkable rubber composition** | | | | | | | | | | |
| Carboxyl group-containing nitrile copolymer rubber (A-1) | (parts) | 100 | | | | 100 | 100 | 100 | 100 | 100 |
| Carboxyl group-containing nitrile copolymer rubber (A-2) | (parts) | | 100 | | | | | | | |
| Carboxyl group-containing nitrile copolymer rubber (A-3) | (parts) | | | 100 | | | | | | |
| Carboxyl group-containing nitrile copolymer rubber (A-4) | (parts) | | | | 100 | | | | | |
| Masterbatch (B-1) (ACM(b1-1)/BAPP= 50/50 mixed at 150°C) | (parts) | 12.6 | 10.5 | 14.1 | 10.5 | | | | | |
| Masterbatch (B-2) (ACM(b1-1)/BAPP= 70/30 mixed at 150°C) | (parts) | | | | | | | | | |
| Masterbatch (B-3) (ACM(b1-2)/BAPP= 50/50 mixed at 150°C) | (parts) | | | | | | | | | |
| Masterbatch (B-4) (AEM(b1-3)/BAPP= 50/50 mixed at 150°C) | (parts) | | | | | | | | | |
| Masterbatch (B'-5) (HNBR/BAPP= 50/50 mixed at 150°C) | (parts) | | | | | | 12.6 | | | |
| Masterbatch (B'-6) (HNBR/BAPP= 50/50 mixed at 120°C) | (parts) | | | | | | | 12.6 | | |
| 2,2-Bis[4-(4-aminophenoxy)phenyl]propane (BAPP) | (parts) | | | | | 6.3 | | | | |
| Hexamethylenediamine carbamate | (parts) | | | | | | | | 2.4 | |
| N,N'-Dicinnamylidene-1,6-hexanediamine | (parts) | | | | | | | | | 5 |
| Carbon black | (parts) | 50 | 55 | 60 | 60 | 40 | 40 | 40 | 40 | 40 |
| Silica | (parts) | | | | | | | | | |
| Tri-2-ethylhexyl trimellitate | (parts) | 5 | 5 | 5 | 5 | 5 | 5 | 5 | 5 | 5 |
| Polyether ester | (parts) | | | | | | | | | |
| 4,4'-Di-(α,α-dimethylbenzyl)diphenylamine | (parts) | 1.5 | 1.5 | 1.5 | 1.5 | 1.5 | 1.5 | 1.5 | 1.5 | 1.5 |
| Stearic acid | (parts) | 1 | 1 | 1 | 1 | 1 | 1 | 1 | 1 | 1 |
| Polyoxyethylene alkyl ether phosphoric acid ester | (parts) | 1 | 1 | 1 | 1 | 1 | 1 | 1 | 1 | 1 |
| γ-Aminopropyltriethoxysilane | (parts) | | | | | | | | | |
| γ-Glycidyloxypropyltrimethoxysilane | (parts) | 0.5 | 0.5 | 0.5 | 0.5 | | | | | |
| 1,8-Diazabicyclo[5.4.0]-undecene-7 (60% product) | (parts) | 4 | 4 | 4 | 4 | 4 | 4 | 4 | 4 | 4 |
| **Evaluation** | | | | | | | | | | |
| Dispersibility of cross-linking agent in cross-linkable rubber composition | | Good | Good | Good | Good | Poor | Good | Poor | Good | Good |
| Tensile strength | (MPa) | 24.2 | 28.6 | 23.9 | 23 | 18.7 | 21.2 | 19 | 22.7 | 23.8 |
| Elongation at break | (%) | 210 | 260 | 180 | 200 | 190 | 230 | 190 | 240 | 320 |
| Elongation change rate after heat aging | (%) | -8 | -8 | -8 | -8 | -16 | -25 | -16 | -20 | -20 |
| Rate of compression set | (%) | 27 | 23 | 24 | 24 | 22 | 21 | 22 | 20 | 24 |

In Table 1 and Table 2, "ACM (b1-1)" refers to an acrylic rubber (b1-1), "ACM (b1-2)" refers to an acrylic rubber (b1-2), "AEM (b1-3)" refers to an ethylene acrylate rubber (b1-3), "HNBR" refers to a hydrogenated nitrile rubber, and "BAPP" refers to 2,2-bis[4-(4-aminophenoxy)phenyl]propane.

As shown in Table 1 and Table 2, it can be verified that the cross-linkable rubber compositions obtained by adding a masterbatch (B) comprising an acrylic rubber (b1) and an aromatic polyvalent amine cross-linking agent (b2) to a carboxyl group-containing nitrile copolymer rubber (A) having an iodine value of 120 or less have a good dispersibility of a cross-linking agent therein and can provide cross-linked rubbers excellent in original state physical properties (tensile strength, elongation at break), heat aging resistance (elongation change rate after heat aging) and compression set resistance (Examples 1 to 19).

In contrast to this, when an aromatic polyvalent amine cross-linking agent (b2) was added directly without masterbatching to a carboxyl group-containing nitrile copolymer rubber (A) having an iodine value of 120 or less, the dispersibility of the cross-linking agent was poor, and the obtained cross-linked rubber was poor in heat aging resistance (elongation change rate after heat aging) (Comparative Example 1).

In addition, when a masterbatch of an aromatic polyvalent amine cross-linking agent (b2) was obtained by using a hydrogenated nitrile rubber in place of the acrylic rubber (b1) and mixing it with the cross-linking agent at 150°C, the dispersibility of the cross-linking agent was good but the obtained cross-linked rubber resulted in a deterioration in heat aging resistance (elongation change rate after heat aging). When a masterbatch of an aromatic polyvalent amine cross-linking agent (b2) was obtained by using a hydrogenated nitrile rubber in place of the acrylic rubber (b1) and mixing it with the cross-linking agent at 120°C, the dispersibility of the cross-linking agent was poor and the obtained cross-linked rubber resulted in a deterioration in heat aging resistance (elongation change rate after heat aging) (Comparative Examples 2 and 3).

Further, when hexamethylenediamine carbamate or N,N'-dicinnamylidene-1,6-hexanediamine was used in place of the masterbatch (B) comprising an acrylic rubber (b1) and an aromatic polyvalent amine cross-linking agent (b2), the obtained cross-linked rubbers were poor in heat aging resistance (elongation change rate after heat aging) (Comparative Examples 4 and 5).

## Claims

1. A method for producing a cross-linkable rubber composition, comprising:

    a first step of providing a carboxyl group-containing nitrile copolymer rubber (A) having an iodine value of 120 or less;
    a second step of mixing an acrylic rubber (b1) with an aromatic polyamine cross-linking agent (b2) to obtain a masterbatch (B); and
    a third step of mixing the carboxyl group-containing nitrile copolymer rubber (A) with the masterbatch (B).

2. The method for producing a cross-linkable rubber composition according to claim 1, wherein the second step is a step of mixing the acrylic rubber (b1) with the aromatic polyamine cross-linking agent (b2) at a temperature higher than a melting point of the aromatic polyamine cross-linking agent (b2) by 10°C or more.

3. The method for producing a cross-linkable rubber composition according to claim 1 or 2, wherein an amount of the masterbatch (B) mixed is 0.1 to 40 parts by weight in relation to 100 parts by weight of the carboxyl group-containing nitrile copolymer rubber (A).

4. The method for producing a cross-linkable rubber composition according to any one of claims 1 to 3, wherein a mixing ratio between the acrylic rubber (b1) and the aromatic polyamine cross-linking agent (b2), the acrylic rubber (b1): the aromatic polyamine cross-linking agent (b2), is 20:80 to 90:10 by weight.

5. The method for producing a cross-linkable rubber composition according to any one of claims 1 to 4, wherein the third step is a step of mixing the carboxyl group-containing nitrile copolymer rubber (A) with the masterbatch (B) and silica.

6. The method for producing a cross-linkable rubber composition according to any one of claims 1 to 5, wherein the acrylic rubber (b1) comprises 50 to 100 wt% of a (meth)acrylate ester monomer unit and 0 to 10 wt% of a cross-linkable monomer unit.

7. The method for producing a cross-linkable rubber composition according to any one of claims 1 to 5, wherein the acrylic rubber (b1) comprises 50 to 99.9 wt% of a (meth)acrylate ester monomer unit, 0 to 10 wt% of a cross-linkable monomer unit, and 0.1 to 50 wt% of an ethylene monomer unit.

8. The method for producing a cross-linkable rubber composition according to any one of claims 1 to 7, wherein the aromatic polyamine cross-linking agent (b2) has a phenoxy group.

9. A method for producing a cross-linked rubber, comprising a step of cross-linking the cross-linkable rubber composition obtained by the method according to any one of claims 1 to 8.

## INTERNATIONAL SEARCH REPORT

| International application No. |
|---|
| PCT/JP2016/080384 |

**A. CLASSIFICATION OF SUBJECT MATTER**

*C08J3/22*(2006.01)i, *C08J3/24*(2006.01)i, *C08K3/36*(2006.01)i, *C08K5/18*
(2006.01)i, *C08L15/00*(2006.01)i, *C08L33/08*(2006.01)i

According to International Patent Classification (IPC) or to both national classification and IPC

**B. FIELDS SEARCHED**

Minimum documentation searched (classification system followed by classification symbols)
C08J3/22, C08J3/24, C08K3/36, C08K5/18, C08L15/00, C08L33/08

Documentation searched other than minimum documentation to the extent that such documents are included in the fields searched
Jitsuyo Shinan Koho        1922-1996   Jitsuyo Shinan Toroku Koho   1996-2016
Kokai Jitsuyo Shinan Koho   1971-2016   Toroku Jitsuyo Shinan Koho   1994-2016

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2007/072900 A1  (Nippon Zeon Co., Ltd.), 28 June 2007 (28.06.2007), claims; examples & JP 2013-91807 A       & JP 5256740 B2 & JP 2015-45004 A       & US 2010/0168302 A1 claims; examples & US 2012/0172509 A1    & US 2013/0102725 A1 & US 2014/0296404 A1    & EP 1964882 A1 & CN 101331183 A | 1-9 |
| A | JP 2001-55471 A  (Nippon Zeon Co., Ltd.), 27 February 2001 (27.02.2001), claims; examples & US 6657014 B1 claims; examples & WO 2001/014469 A1     & EP 1234851 A1 & DE 60010923 D | 1-9 |

☒ Further documents are listed in the continuation of Box C.   ☐ See patent family annex.

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 27 December 2016 (27.12.16) | 10 January 2017 (10.01.17) |

| Name and mailing address of the ISA/ Japan Patent Office 3-4-3,Kasumigaseki,Chiyoda-ku, Tokyo 100-8915,Japan | Authorized officer |
|---|---|
| | Telephone No. |

Form PCT/ISA/210 (second sheet) (January 2015)

**INTERNATIONAL SEARCH REPORT**

International application No.

PCT/JP2016/080384

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2011-74139 A  (Nippon Zeon Co., Ltd.),<br>14 April 2011 (14.04.2011),<br>claims; examples<br>(Family: none) | 1-9 |
| A | JP 2003-221467 A  (Nippon Zeon Co., Ltd.),<br>05 August 2003 (05.08.2003),<br>claims; examples<br>(Family: none) | 1-9 |
| A | JP 2007-262136 A  (Nippon Zeon Co., Ltd.),<br>11 October 2007 (11.10.2007),<br>claims; examples<br>(Family: none) | 1-9 |
| A | WO 2014/050853 A1  (Nippon Zeon Co., Ltd.),<br>03 April 2014 (03.04.2014),<br>claims; examples<br>& US 2015/0246991 A1<br>claims; examples<br>& EP 2902437 A1         & CN 104583298 A | 1-9 |
| A | JP 8-100084 A  (Nippon Zeon Co., Ltd.),<br>16 April 1996 (16.04.1996),<br>claims; examples<br>(Family: none) | 1-9 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5742719 B